(19) Europäisches Patentamt / European Patent Office / Office européen des brevets

(11) **EP 4 036 826 A1**

(12) **EUROPEAN PATENT APPLICATION**

(43) Date of publication:
**03.08.2022  Bulletin 2022/31**

(21) Application number: **21305127.9**

(22) Date of filing: **29.01.2021**

(51) International Patent Classification (IPC):
**G06Q 10/08** *(2012.01)*

(52) Cooperative Patent Classification (CPC):
**G06Q 10/0836**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Quadient Technologies France 92220 Bagneux (FR)**

(72) Inventor: **POINTEAU, Stéphane 84300 CAVAILLON (FR)**

(74) Representative: **Cabinet Beau de Loménie 158, rue de l'Université 75340 Paris Cedex 07 (FR)**

(54) **METHOD FOR PREDICTING THE DAILY AVAILABLE CAPACITY OF A PARCEL PICK-UP STATION AND COMPUTERIZED LOCKER BANKS**

(57)    A computer-implemented method for forecasting a daily available capacity of a parcel locker bank (50) which has several selectively securable parcel lockers (1-20) and allows a storage of a parcel in one of its lockers (1-20) during a maximum number of days referenced N, the method comprising, for a number (P) of parcel lockers, the following forecasting steps:
- receiving (100) the number of parcels already delivered or to be delivered to the parcel locker bank for each day between a chosen future day (j) and N-1 days before said chosen future day (j), said chosen day (j) corresponding to a day on which a user wishes to deliver said parcel to the locker bank,
- estimating (110) a number (Sj) of parcel lockers that should contain a parcel on said chosen future day (j), said estimation being based on said received number of parcels already delivered or to be delivered and on pick-up rates of parcel from parcel lockers, said pick-up rates depending on the number of days a parcel which is still in a parcel locker has been stored for,
- calculating (120) a number (Dj) of available parcel locker(s) of said locker bank on said chosen future day (j) resulting from the subtraction of said estimated number (Sj) from said number of parcel lockers (P).

**FIG.2**

EP 4 036 826 A1

## Description

### Background of the invention

The invention relates generally to parcel locker banks, also known as parcel pick-up stations, and in particular to forecasting the available capacity of a parcel locker bank.

One of the main specificity of deliveries to places else than a home, i.e. parcel locker banks, is the fact that there is a complete uncertainty on the moment the parcel will be picked-up from the parcel locker in which it is stored. It is therefore impossible to know if the parcel locker containing a parcel to be picked-up, is available or not and can be used for another delivery or not. This uncertainty is a problem, first for a carrier agent when he needs to plan a delivery of a parcel in a parcel locker bank because it would be unproductive to bring to a parcel locker bank a parcel which can finally not be stored in this parcel locker bank but also because waiting to get the information that a pick-up has occurred and therefore that a parcel locker is available is time consuming and also unproductive, and second, when a customer orders a parcel, as it is difficult and sometimes nearly impossible to offer a specific location and pick-up time to the customer.

Moreover, this uncertainty on the moment of pick-up generates a time lag between the moment the parcel is placed in the parcel locker and the moment the parcel is picked-up by the final recipient. This time lag generates a stock. Each parcel is stored during a finite time lapse which length is unknown.

Carriers are not able to propose any elaborate solution other than a booking solution, which is the safest solution but not the most optimal.

In document US 2018/190062 is known a computerized locker network comprising several locker banks, several portable computing devices and at least one logistic server, each locker bank comprising a computer bank computer and some selectively securable locker compartments with a door and a locking mechanism. This global system is configured to identify an available locker compartment of a locker bank to store a parcel after an unsuccessful attempt of delivery to a customer's home address.

Accordingly, there is a need for improved systems and processes to maximise the efficiency of a parcel locker bank by minimizing the risk of a delivery failure.

### Object and summary of the invention

The invention aims to provide a computer-implemented method and a computerized system for forecasting a daily available capacity of a parcel locker bank and thus help maximise the efficiency of the parcel locker bank by minimizing the risk of a delivery failure.

A first object of the invention proposes a computer-implemented method for forecasting a daily available capacity of a parcel locker bank, said locker bank comprising a plurality of selectively securable parcel lockers and allowing a storage of a parcel in one of its parcel lockers during a maximum number of days equal to a first integer number referenced N here after.

The method comprises, for a number of parcel lockers equal to a second integer number, the following forecasting steps:

- receiving the number of parcels already delivered or to be delivered to the parcel locker bank for each day between a chosen future day and a number of days before said chosen future day equal to N-1, said chosen day corresponding to a day on which a user wishes to deliver at least one parcel to said parcel locker bank,

- estimating a third number corresponding to the number of parcel lockers that should contain a parcel on said chosen future day, said estimation being based on said received number of parcels already delivered or to be delivered and on pick-up rates of parcel from parcel lockers, said pick-up rates being given for each day and depending on the number of days a parcel which is still in a parcel locker has been stored for,

- calculating a fourth number corresponding to the number of available parcel locker(s) of said parcel locker bank on said chosen future day, said fourth number resulting from the subtraction of said third number from said second integer number.

Such a method can be applied to all origins of incoming parcel flows, such as second delivery packages when parcels a redirected to a parcel locker bank after a first home delivery attempt, direct parcels when a parcel locker is used to exchange a parcel between two e-merchants, or drop-off parcels when a merchant drops a parcel in a locker for a carrier to pick it up.

The pick-up rates can be based on a training group of data relating to pick-up rates previously observed on other parcel locker banks. These pick-up rates derived from the training group of data can be used to initiate the method and the system of the parcel locker bank.

Then, once a parcel locker bank is in use, the pick-up rates can be updated every day with the daily data relative to the parcels which have been picked up during the day and the parcel lockers which are still stored with a parcel as indicated in the following paragraph.

In a first aspect of the computer-implemented method, each pick-up rate is estimated by regression every day during closing hours of the parcel locker bank, the regression taking into account real pick-up rates for a number of previous days for which the pick-up rate is known, and taking into account if some of the days are holidays.

The main benefit from manipulating rates is its aggregation property. Indeed, given two lockers, one can calculate the pick-up rate for each machine but also for the couple of parcel lockers. This property avoids calculating the different pick-up rates for all couples of parcel locker and product.

An individual model is applied to high volume collection banks, for the rest, an aggregated model is enough, overflow problem does not arise.

Moreover, in the daily regression, the latest data collected regarding the pick-ups can be dealt in the regression with a higher weight than the older ones so as to have pick-up rates as close as possible to the current reality of pick-ups.

In a second aspect of the computer-implemented method, the forecasting steps can further comprise a validation step following the calculation of said fourth number, the validation step comprising a comparison of the fourth number to a threshold, and an indication that no parcel locker is available if the fourth number is smaller than said threshold.

Comparing said fourth number to a validation threshold gives a higher assurance of having a parcel locker available on the desired day. Indeed, as the available check is based on pick-up probabilities, a risk exists to have a parcel locker eventually unavailable instead of available as forecasted. This threshold helps reducing the risk of encountering such a situation.

In another embodiment, the computer-implemented method can comprise, after the calculation step, a secondary calculation of a fourth number for each day between said future day up to the last day on which a parcel can be stored, said fourth number corresponding to the number of available parcel locker(s) for each day of this time interval, and being based on the third number and the received number of parcels delivered or announced to be delivered by carriers to parcel lockers of said specific type of the parcel locker bank on the day for which the calculation is made, and a validation step comprising a comparison of each fourth number calculated to a threshold and an indication that no parcel locker is available if each fourth number calculated is smaller than said threshold.

In a third aspect of the computer-implemented method, said parcel locker bank comprises a first class of parcel lockers with a first size and at least a second class of parcel lockers with at least a second size bigger than the first size, said forecasting steps being iterated for each class of parcel lockers, the second integer number corresponding, for each class of parcel lockers, to the number of parcel lockers of said class of parcel lockers.

The processing of the forecasting steps for each class of parcel lockers can be performed simultaneously.

In a fourth aspect of the computer-implemented method, said parcel locker bank has a first group of parcel lockers assigned only to a first user, and a second group of parcel lockers assigned to said first user and at least one other user, said forecasting steps being iterated for each group of parcel lockers, the second integer number corresponding, for each group of parcel lockers, to the number of parcel lockers of said group.

The processing of the forecasting steps for each group of parcel lockers can be performed simultaneously.

In a fifth aspect of the computer-implemented method, said parcel locker bank has a first group of parcel lockers assigned only to a first user, and a second group of parcel lockers assigned to said first user and at least one other user, each group comprising a first lot of parcel lockers with a first size and at least a second lot of parcel lockers with a second size bigger than the first size, said forecasting steps being iterated for each lot of each group of parcel lockers, the second integer number corresponding, for each lot of parcel lockers, to the number of parcel lockers of said lot for the corresponding group.

The processing of the forecasting steps for each size of each lot of parcel lockers can be performed simultaneously.

In a sixth aspect of the computer-implemented method, if the parcel locker bank comprises any defect parcel lockers, the second integer number is recalculated taking into account the number of defect parcel lockers not to consider.

A second subject matter of the invention proposes a computer-implemented method for directing one or more parcels to a suitable parcel locker bank, the method comprising:

- Receiving a request for storing at least one parcel on a chosen future day in one of the parcel locker banks located in the vicinity of a destination address,
- Selecting the parcel locker bank nearest the destination address and determining if there is a suitable parcel locker available on said chosen future day for said parcel by processing the computer-implemented method for forecasting a daily available capacity of said parcel locker bank as defined here above,
- If no suitable parcel locker is available for said parcel in the nearest parcel locker bank, reiterate the selecting and forecasting step as many times as necessary until a suitable available parcel locker on said chosen future day is found, each time with a parcel locker bank the nearest to the destination address after the previous selected one,

- Delivering the indication of said parcel locker bank having a suitable parcel locker available for storing said parcel on said chosen future day, and asking if said available suitable parcel locker must be booked.

A third subject matter of the invention proposes a parcel locker bank management system comprising at least one computerized parcel locker bank, said parcel locker bank comprising a plurality of selectively securable parcel lockers and allowing a storage of a parcel in one of its parcel lockers during a maximum number of days equal to a first integer number referenced N here after, said parcel locker bank further comprising at least one locker bank computer comprising at least one processor and memory configured to collect data relative to the parcel locker bank and transmit them outside the parcel locker bank, the number of parcel lockers being equal to a second integer number, each of the selectively securable parcel lockers comprising at least one door and at least one locking mechanisms, the parcel locker bank management system comprising a forecasting unit in communication with said locker bank computer of said parcel locker bank, said forecasting unit comprising:

- a receiving module configured to receive the number of parcels already delivered or to be delivered to the parcel locker bank for each day between a chosen future day and a number of days before said chosen future day equal to N-1, said chosen day corresponding to a day on which a user wishes to deliver at least one parcel to said parcel locker bank,
- a first calculating module configured to estimate a third number corresponding to the number of parcel lockers that should contain a parcel on said chosen future day, said estimation being based on said received number of parcels already delivered or to be delivered and on pick-up rates of parcel from parcel lockers, said pick-up rates depending on the number of days a parcel which is still in a parcel locker has been stored for,
- a second calculating module configured to calculate a fourth number corresponding to the number of available parcel locker(s) of said parcel locker bank on said chosen future day, said fourth number resulting from the subtraction of said third number from said second integer number.

In a first aspect of the parcel locker bank management system, said first calculating module comprises a regression module configured to estimate each pick-up rate by regression every day during closing hours of the parcel locker bank, the regression taking into account real pick-up rates for a number of previous days for which the pick-up rate is known from the information collected from the real pick-up dates for previously stored parcels, and taking into account if some of the days are holidays.

In a second aspect of the parcel locker management system, said calculating module can comprise a validation module configured to compare the fourth number to a threshold and an indicate that no parcel locker is available if the fourth number is smaller than said threshold.

In a third aspect of the parcel locker bank management system, said parcel locker bank comprises a first class of parcel lockers with a first size and at least a second class of parcel lockers with at least a second size bigger than the first size, said forecasting steps being iterated for each class of parcel lockers, the second integer number corresponding, for each class of parcel lockers, to the number of parcel lockers of said class of parcel lockers.

In a fourth aspect of the parcel locker bank management system, said parcel locker bank has a first group of parcel lockers assigned only to a first user, and a second group of parcel lockers assigned to said first user and at least one other user, said forecasting steps being iterated for each group of parcel lockers, the second integer number corresponding, for each group of parcel lockers, to the number of parcel lockers of said group.

In a fifth aspect of the parcel locker bank management system, said parcel locker bank has a first group of parcel lockers assigned only to a first user, and a second group of parcel lockers assigned to said first user and at least one other user, each group comprising a first lot of parcel lockers with a first size and at least a second lot of parcel lockers with a second size bigger than the first size, said forecasting steps being iterated for each lot of each group of parcel lockers, the second integer number corresponding, for each lot of parcel lockers, to the number of parcel lockers of said lot for the corresponding group.

In a sixth aspect of the parcel locker bank management system, if the parcel locker bank comprises any defect parcel lockers, the second integer number is recalculated taking into account the number of defect parcel lockers not to consider.

In a seventh aspect of the parcel locker bank management system, further comprising a directing unit configured to direct one or more parcels to a suitable parcel locker bank, said directing unit comprising:

- a request module configured to receive a request for storing at least one parcel on a chosen future day in one of the parcel locker banks located in the vicinity of a destination address,
- a selection module configured to select the parcel locker bank nearest the destination address and determining if there is a suitable parcel locker available on said chosen future day for said parcel with the forecasting unit, and configured to, if no suitable parcel locker is available for said parcel in the nearest parcel locker bank, reiterate as many times as necessary until a suitable available parcel locker on said chosen future day is found, each time with a parcel locker bank the nearest to the destination address after the previous selected one,

- a transmitting module configured to deliver the indication of said parcel locker bank having a suitable parcel locker available for storing said parcel on said chosen future day, and asking if said available suitable parcel locker must be booked.

**Brief description of the drawings**

The invention will be better understood by reading here after, as examples and in a non-limitative way, in reference to the enclosed drawings on which:

- Figure 1 is a schematic illustration of an example of a parcel locker bank;
- Figure 2 is a flow chart of a computer-implemented method for forecasting a daily available capacity of a parcel locker bank according to an embodiment of the invention;
- Figure 3 is a flow chart of a computer-implemented method for directing one or more parcels to a suitable parcel locker bank of a network of parcel locker banks according to an embodiment.
- Figure 4 is a schematic view of a parcel locker bank management system comprising at least one computerized parcel locker bank of Figure 1.

**Detailed description of the embodiments**

The present invention will be described with respect to particular embodiments and with reference to certain drawings but the invention is not limited thereto but only by the claims. The drawings described are only schematic and are non- limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

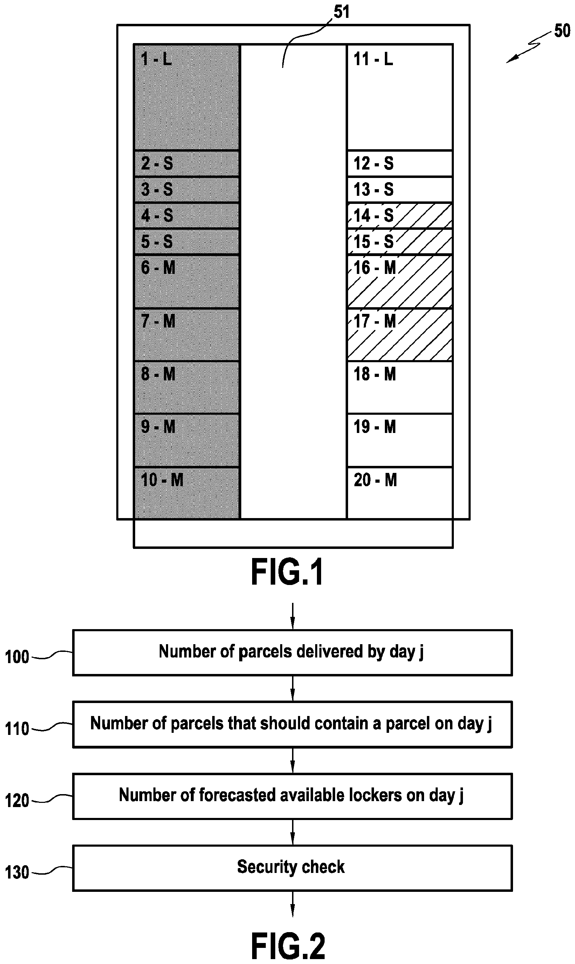

**Figure 1** illustrates schematically a parcel locker bank 50. The parcel locker bank 50 comprises a plurality of selectively securable parcel lockers each identified on the figure with a number comprised between 1 and 20. Each parcel locker has a one of three sizes, each size being identified on figure 2 by reference signs: S for the smallest size of parcel locker, L for the largest size of parcel locker, and M for the intermediate size between S and L, or medium size.

The parcel locker bank is configured to allow storage of a parcel in one of its parcel lockers during a maximum number of days equal to a first integer number referenced N here after, for example 4 days (N=4). If a parcel is still in the parcel locker after a number of days equal to said maximum number of days, the parcel is removed the next day by the carrier. This way parcel lockers do not get stuck with non-picked-up parcels.

The parcel locker bank 50 comprises a locker bank computer 51 comprising a processor and a memory configured to collect data relative to the parcel locker bank 50 and transmit them to a parcel locker bank management system 30. Each of the selectively securable parcel lockers 1 to 20 comprises a door and a locking mechanism.

**Figure 2** is a flow chart of a computer-implemented method for forecasting a daily available capacity of a parcel locker bank according to an embodiment of the invention.

The method is processed for a number of parcel lockers equal to a second integer number referenced P hereafter, and for a given day, referenced j hereafter, corresponding to a day on which a user of a parcel locker, such as a carrier agent, wishes to deliver at least one parcel to said parcel locker bank. Each parcel stored in said parcel locker bank 50 is allowed to be stored for a maximum number of days equal to N from the day on which the parcel is stored in the parcel locker. Therefore, a parcel is stored in a parcel locker from a storage day, such as said given future day j, and can be stored, at the longest, up to a day corresponding to day j+N-1 designated as the latest possible storage day.

As illustrated, said method comprises the following forecasting steps. In a first step 100, is received the number of parcels already delivered or to be delivered to the parcel locker bank 50 for each day between said given future day j and said latest possible storage day j+N-1, and for each day between day j and a number of days before said future day equal to N-1, i.e. down to day j-N+1.

In a second step 110, is estimated a third number Sj corresponding to the number of parcel lockers that should contain a parcel on said given future day j. The estimation is based on the number of parcels already delivered or to be delivered and on pick-up rates of parcel from parcel lockers. The pick-up rates depend on the number of days a parcel which is still in a parcel locker has been stored for.

The third number Sj is given by the following equation:

$$Sj = \sum_{i=1}^{N-1} \left\{ Del_{j-i} \left( 1 - \sum_{k=1}^{i} PackRate_{j-k,j-i} \right) \right\}$$

with $Del_x$ corresponding to the number of deliveries of parcels to the parcel locker bank on day x, $PckRate_{y,z}$ the pick-up rate on day y among parcels delivered on day z, with day y being later than day z. $Del_x$ corresponds to deliveries, which already occurred or which are announced by carriers as due to be delivered for day x.

When a parcel locker bank is due to enter production regarding the method for forecasting a daily available capacity of a parcel locker bank, the pick-up rates, which are applied to the parcel locker bank, are based on a training group of data relating to pick-up rates previously observed on the same parcel locker bank or similar parcel locker banks. These pick-up rates derived from the training group of data are used to initiate the method when the parcel locker bank enters into production regarding the method for forecasting a daily available capacity of a parcel locker bank. Then, once a parcel locker bank is in use in production, the pick-up rates are updated every day with the daily data relative to the flow of parcels relative to the parcel locker bank as indicated in the following paragraphs.

To train the system as regards pick-up rates, the parcel lockers are classified regarding the couple (locker, product), i.e. the type product stored in a given parcel locker, and the two following variables can be used for classification: total of deliveries and seniority. Thus, the models applied differ regarding the number of parcels delivered for a locker, and the age of the parcel locker.

For example, when the couple (locker, product) has a total of deliveries strictly higher than 365, an individual model is applied. Otherwise, it is assigned to a different model which aims to bring together the closest individuals, as it is assumed that parcel lockers next to each other and with the same partner are nearly similar.

Two couples of (locker, product) having a same model (other than an individual model), have the same training dataset. And so, the same pick-up rates.

Each pick-up rate is estimated by regression every day during closing hours of the parcel locker bank, the regression taking into account real pick-up rates for a number of previous days for which the pick-up rate is known, and taking into account if some of the days are holidays.

In a third step 120, is calculated a fourth number Dj corresponding to the number of available parcel locker(s) of the parcel locker bank on said given future day j. The fourth number Dj results from the subtraction of said third number from said second integer number: Dj=P-Sj. The third number thus corresponds to the remaining available parcel lockers on the day for which the calculation is made. In other words, the third number for a day j corresponds to the number of available parcel lockers for day j considering only the parcels currently stored or announced to be delivered into a parcel locker for day j, at a specific time such as 6 am.

In this embodiment, the method comprises a fourth step 130, to reduce the risk of mistake on the availability of the parcel locker on the desired day. The fourth step 130 comprises a comparison of the fourth number to a threshold, and an indication that no parcel locker is available if the fourth number is smaller than said threshold.

The forecasting steps 100 to 130 are iterated for each size S, M and L of parcel lockers. For each iteration, the second integer number P corresponds to the number of parcel lockers of said size and the number of deliveries of parcels to the parcel locker bank corresponds to the ones relating to the size and the pick-up rates correspond to the ones relating to said size if the rates are any different.

In the embodiment of parcel locker bank illustrated in Figure 1, the parcel locker bank 50 has a first group of parcel lockers in light grey assigned only to a first user, a second group of parcel lockers which have been shaded in Figure 1 assigned to a second user only, and a third group of parcel lockers in white which are shared between said first user and said second user.

In such a configuration, the forecasting steps 110 to 130 are iterated for each group of parcel lockers, the second integer number P corresponding, for each group of parcel lockers, to the number of parcel lockers of said group of parcel lockers.

In an option, the method can also take into account if the parcel locker bank comprises any defective parcel lockers. In this case, the second integer number P is recalculated taking into account the number of defective parcel lockers not to consider.

In another embodiment of the method illustrated on figure 2, the method can comprise an additional step between said third step 120 and said fourth step 130.

In the additional step 125 is calculated, for each between day j and day j+N-1, a fourth number corresponding to the number of available parcel locker(s) for each day of this time interval. The fourth number is based on the third number and the received number of parcels delivered or announced to be delivered by carriers to parcel lockers of said specific type of the parcel locker bank on the day for which the calculation is made. The fourth number thus corresponds to the number of available parcel lockers of said specific type taking into account every parcel already stored and every parcel planned to be stored for every day comprised in the time interval during which a parcel can be stored if stored on day j, i.e. during the N days a parcel can be stored in a parcel locker of the parcel locker bank.

The fourth number Ej is given by the following equation:

$$E_j = D_j - Del_j - 1$$

for said desired day j $E_{j+k} = D_{j+k} - Del_{j+k} - \left(1 - \sum_{i=1}^{k} PackRate_{j+k-i,j+k-i}\right)$ for days comprised between day j+1 and day j+N-1

k being a calculation parameter, k being an integer number as calculations are made for each day.

In such embodiment, the fourth step 130 comprises, for each day from said desired day j up to the last day on which a parcel can be stored, day j+N-1, a comparison of said fourth number Ej to a threshold τ. If each fourth number which has been compared is bigger than said threshold, an indication is given out to signal that a parcel locker is available for said parcel in said parcel locker bank 50. In other words the indication is sent if:

$$D_j > \tau \; and \; D_{j+1} > \tau \; and \; D_{j+2} > \tau \; ... \; and \; D_{j+N-1} > \tau$$

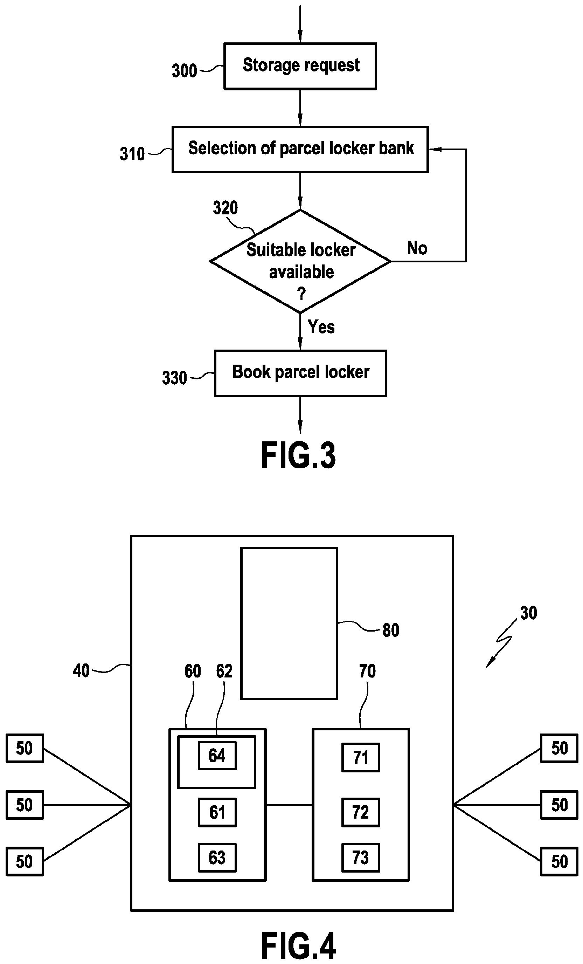

**Figure 3** is a flow chart of a computer-implemented method for directing one or more parcels to a suitable parcel locker bank 50 of a network of parcel locker banks.

In a first step 300 of the method is received a request for storing at least one parcel on a given future day j in one of the parcel locker banks located in the vicinity of a destination address.

In a second step 310, the parcel locker bank nearest to the destination address is selected and, in a third step 320, it is determined whether there is a suitable parcel locker available on said given future day j for said parcel by processing the forecasting step 100 to 120 of the computer-implemented method of figure 2.

A parcel locker is considered suitable to hold the parcel if the size is big enough to hold the parcel inside and if it is not assigned only to a user different than the user requesting the parcel locker. Steps 310 and 320 can be performed within a same step as the invention allows for identifying parcel locker banks with available lockers.

If, in step 320, no suitable parcel locker is available for said parcel in the nearest parcel locker bank which has been selected in step 310, steps 310 and 320 are reiterated as many times as necessary until a suitable available parcel locker on said given future day is found, but for each iteration with a different parcel locker bank, the parcel locker bank selected each time being the one nearest to the destination address after the previous selected one.

Other priorities can be defined between the different specificities. For example, accessible zones could be sorted first by sizes of parcel lockers, then by assigned zones (parcel lockers assigned to the user first, and then parcel lockers shared between different users), and then by comfort zones.

Once a suitable parcel locker has been found in step 320, the method delivers, in a fourth step 330, the indication of the selected parcel locker bank having a suitable parcel locker available for storing said parcel on said given future day j, and asks if said suitable parcel locker must be booked.

In the methods illustrated in figures 2 and 3, estimations and calculations are made on a daily basis, i.e. that every Pick-up rate is given for one day, and that every number relative to deliveries or pick-ups is given for one day.

It has been observed that, during the phase for parcel delivery, which occurs at the beginning of the day, usually between 7am and 4pm, there is no (or rather limited) new availabilities of parcel lockers . A parcel locker were a parcel was delivered during the day or the days before does not become available until 5pm. Thus daily modelling before the delivery phase, such as at 6am for example, is enough.

**Figure 4** is a schematic view of a parcel locker bank management system 30 comprising at least one computerized parcel locker bank 50 as defined in Figure 1. The parcel locker bank management system comprises a central device 40 comprising a forecasting unit 60, a direction unit 70 and a data storage unit 80, the central device 40 and its units 60, 70 and 80 being in communication with the locker bank computers of the parcel locker banks 50. The data storage unit 80 is configured to receive and store all the information sent by the at least one computerized parcel locker bank 50.

The forecasting unit 60 is configured to process the computer-implemented method for allocating one or more parcels to a suitable parcel locker bank 50 of a network of parcel locker banks of figure 3. For this purpose, the forecasting unit 60 comprises a receiving module 61, a first calculating module 62, a second calculating module 63, and a regression module 64.

The receiving module 61 is configured to receive, from the data storage unit 80, the number of parcels already delivered or to be delivered to the parcel locker bank for each day between a given future day j and a future day arriving N-1 days after said given day j, said given day corresponding to a day on which a user wishes to deliver at least one parcel to said parcel locker bank. In another embodiment, the receiving module 61 can be made of several distinct modules each dedicated to receive a certain type of information.

The first calculating module 62 is configured to estimate the third number Sj and the second calculating module 63 is configured to calculate the fourth number Dj.

The first calculating module 62 comprises a regression module 64 configured to estimate each pick-up rate by regression every day during closing hours of the parcel locker bank, the regression taking into account real pick-up rates for a number of previous days for which the pick-up rate is known from the information collected from the real pick-up dates for previously stored parcels, and taking into account if some of the days are holidays.

The directing unit 70 is configured to direct each parcel for which a request has been made to a suitable parcel locker bank 50. The directing unit 70 comprises a request module 71, a selection module 72, and a transmission module 73.

The request module 71 is configured to receive a request for storing a parcel on a given future day j in one of the parcel locker banks 50 located in the vicinity of a destination address.

The selection module 72 is configured to select the parcel locker bank nearest the destination address and determine if there is a suitable parcel locker available on said given future day j for said parcel with the other modules of the forecasting unit 60.

The transmitting module 73 is configured to deliver the indication of the nearest parcel locker bank which has a suitable parcel locker available for storing said parcel on said given future day j, and ask the user, i.e. the carrier agent, if the selected parcel locker must be booked.

The invention provides a computer-implemented method and a computerized system for forecasting a daily available capacity of a parcel locker bank and thus help maximise the efficiency of the parcel locker bank by minimizing the risk of a delivery failure.

## Claims

1. A computer-implemented method for forecasting a daily available capacity of a parcel locker bank (50), said locker bank (50) comprising a plurality of selectively securable parcel lockers (1-20) and allowing a storage of a parcel in one of its parcel lockers (1-20) during a maximum number of days equal to a first integer number referenced N here after, the method comprising, for a number of parcel lockers equal to a second integer number (P), the following forecasting steps:

   - receiving (100) the number of parcels already delivered or to be delivered to the parcel locker bank for each day between a future day (j), and a number of days before said chosen future day (j) equal to N-1, said chosen day (j) corresponding to a day on which a user wishes to deliver at least one parcel to said parcel locker bank,
   - estimating (110) a third number (Sj) corresponding to the number of parcel lockers that should contain a parcel on said chosen future day (j), said estimation being based on said received number of parcels already delivered or to be delivered and on pick-up rates of parcel from parcel lockers, said pick-up rates being given for each day and depending on, for each parcel still stored in a parcel locker, the number of days a parcel has been stored for,
   - calculating (120) a fourth number (Dj) corresponding to the number of available parcel locker(s) of said parcel locker bank on said chosen future day (j), said fourth number (Dj) resulting from the subtraction of said third number (Sj) from said second integer number (P).

2. The computer-implemented method according to claim 1, wherein each pick-up rate is estimated by regression every day during closing hours of the parcel locker bank, the regression taking into account real pick-up rates for a number of previous days for which the pick-up rate is known, and taking into account if some of the days are holidays.

3. The computer-implemented method according to any of claims 1 or 2, wherein the forecasting steps further comprise a validation step following the calculation of said fourth number, the validation step comprising a comparison of the fourth number to a threshold, and an indication that no parcel locker is available if the fourth number is smaller than said threshold.

4. The computer-implemented method according to any of claims 1 or 2, comprising, after the calculation step, a secondary calculation of a fourth number for each between day between said future day (j) up to the last day on which a parcel can be stored (j+N-1), said fourth number corresponding to the number of available parcel locker(s) for each day of this time interval, and being based on the third number and the received number of parcels delivered or announced to be delivered by carriers to parcel lockers of said specific type of the parcel locker bank on the day for which the calculation is made, and a validation step comprising a comparison of each fourth number calculated to a threshold ($\tau$) and an indication that no parcel locker is available if each fourth number calculated is smaller than said threshold.

5. The computer-implemented method according to any of claims 1 to 4, wherein said parcel locker bank comprises a first class of parcel lockers with a first size and at least a second class of parcel lockers with at least a second size bigger than the first size, said forecasting steps being iterated for each class of parcel lockers, the second integer number (P) corresponding, for each class of parcel lockers, to the number of parcel lockers of said class of parcel lockers.

6. The computer-implemented method according to any of claims 1 to 4, wherein said parcel locker bank has a first group of parcel lockers assigned only to a first user, and a second group of parcel lockers assigned to said first user and at least one other user, said forecasting steps being iterated for each group of parcel lockers, the second integer number (P) corresponding, for each group of parcel lockers, to the number of parcel lockers of said group.

7. The computer-implemented method according to any of claims 1 to 4, wherein said parcel locker bank has a first group of parcel lockers assigned only to a first user, and a second group of parcel lockers assigned to said first user and at least one other user, each group comprising a first lot of parcel lockers with a first size and at least a second lot of parcel lockers with a second size bigger than the first size, said forecasting steps being iterated for each lot of each group of parcel lockers, the second integer number (P) corresponding, for each lot of parcel lockers, to the number of parcel lockers of said lot for the corresponding group.

8. The computer-implemented method according to any of claims 1 to 7, wherein, if the parcel locker bank comprises any defective parcel lockers, the second integer number (P) is recalculated taking into account the number of defective parcel lockers not to be considered.

9. A computer-implemented method for directing one or more parcels to a suitable parcel locker bank, the method comprising:

- Receiving (300) a request for storing at least one parcel on a future day (j) in one of the parcel locker banks located in the vicinity of a destination address,
- Selecting (310) the parcel locker bank nearest the destination address and determining (320) if there is a suitable parcel locker available on said chosen future day for said parcel by processing the computer-implemented method for forecasting a daily available capacity of said parcel locker bank according to any of claims 1 to 7,
- If no suitable parcel locker is available for said parcel in the nearest parcel locker bank, reiterating the selecting and forecasting step as many times as necessary until a suitable available parcel locker on said chosen future day (j) is found, each time with a parcel locker bank the nearest to the destination address after the previous selected one,
- Delivering (330) the indication of said parcel locker bank having a suitable parcel locker available for storing said parcel on said chosen future day (j), and asking if said available suitable parcel locker must be booked for said user.

10. A parcel locker bank management system (30) comprising at least one computerized parcel locker bank (50), said at least one computerized parcel locker bank (50) comprising a plurality of selectively securable parcel lockers (1-20) and allowing a storage of a parcel in one of its parcel lockers during a maximum number of days equal to a first integer number (N), said at least one computerized parcel locker bank (50) further comprising at least one locker bank computer (51) comprising at least one processor and memory configured to collect data relative to said at least one computerized parcel locker bank (50) and transmit them outside said at least one computerized parcel locker bank (50), the number of parcel lockers being equal to a second integer number (P), each of the selectively securable parcel lockers comprising at least one door and at least one locking mechanisms, the parcel locker bank management system (30) comprising a forecasting unit (60) in communication with said locker bank computer (51) of said at least one computerized parcel locker bank (50), said forecasting unit (60) comprising:

- a receiving module (61) configured to receive the number of parcels already delivered or to be delivered to the parcel locker bank for each day between a future day (j) and a number of days before said chosen future day (j) equal to N-1, said chosen future day (j) corresponding to a day on which a user wishes to deliver at least one parcel to said parcel locker bank,
- a first calculating module (62) configured to estimate a third number (Sj) corresponding to the number of parcel lockers that should contain a parcel on said chosen future day (j), said estimation being based on said received number of parcels already delivered or to be delivered and on pick-up rates of parcel from parcel lockers, said pick-up rates depending on, for each parcel still stored in a parcel locker, the number of days a parcel has been stored for,
- a second calculating module (63) configured to calculate a fourth number (Dj) corresponding to the number of available parcel locker(s) of said parcel locker bank on said chosen future day (j), said fourth number (Sj) resulting from the subtraction of said third number (Sj) from said second integer number (P).

11. The parcel locker bank management system (30) according to claim 10, wherein said first calculating module (62) comprises a regression module (64) configured to estimate each pick-up rate by regression every day during closing hours of the parcel locker bank, the regression taking into account real pick-up rates for a number of previous days for which the pick-up rate is known from the information collected from the real pick-up dates for previously stored parcels, and taking into account if some of the days are holidays.

12. The parcel locker bank management system (30) according to any of claims 10 or 11, wherein said calculating module (63) comprises a validation module configured to compare the fourth number to a threshold and an indicate that no parcel locker is available if the fourth number is smaller than said threshold.

13. The parcel locker bank management system (30) according to any of claims 9 to 11, wherein said at least one computerized parcel locker bank (50) has a first group of parcel lockers assigned only to a first user, and a second group of parcel lockers assigned to said first user and at least one other user, each group comprising a first lot of parcel lockers with a first size and at least a second lot of parcel lockers with a second size bigger than the first size, said forecasting steps being iterated for each lot of each group of parcel lockers, the second integer number (P) corresponding, for each lot of parcel lockers, to the number of parcel lockers of said lot for the corresponding group.

14. The parcel locker bank management system (30) according to any of claims 10 to 13, wherein, if said at least one computerized parcel locker bank (50) comprises any defective parcel lockers, the second integer number (P) is recalculated taking into account the number of defective parcel lockers not to consider.

15. The parcel locker bank management system (30) according to any of claims 10 to 14, further comprising a directing unit (70) configured to direct one or more parcels to a suitable parcel locker bank (50), said directing unit (70) comprising:

- a request module (71) configured to receive a request for storing at least one parcel on a chosen future day (j) in one of the parcel locker banks located in the vicinity of a destination address,
- a selection module (72) configured to select the parcel locker bank nearest to the destination address and determining if there is a suitable parcel locker available on said chosen future day for said parcel with the forecasting unit (60), and configured to, if no suitable parcel locker is available for said parcel in the nearest parcel locker bank, reiterate as many times as necessary until a suitable available parcel locker on said chosen future day (j) is found, each time with a parcel locker bank the nearest to the destination address after the previous selected one,
- a transmitting module (73) configured to deliver the indication of said parcel locker bank having a suitable parcel locker available for storing said parcel on said chosen future day (j), and to ask if said available suitable parcel locker must be booked.

**FIG.1**

| 100 | Number of parcels delivered by day j |
| 110 | Number of parcels that should contain a parcel on day j |
| 120 | Number of forecasted available lockers on day j |
| 130 | Security check |

**FIG.2**

**FIG.3**

**FIG.4**

Europäisches
Patentamt

European
Patent Office

Office européen
des brevets

## EUROPEAN SEARCH REPORT

Application Number

EP 21 30 5127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/060812 A1 (ROBINSON KALIN [US] ET AL) 1 March 2018 (2018-03-01)<br>* paragraph [0002] *<br>* paragraph [0025] - paragraph [0035] *<br>* figures 1,2 *<br>----- | 1-15 | INV.<br>G06Q10/08 |

TECHNICAL FIELDS
SEARCHED      (IPC)

G06Q

The present search report has been drawn up for all claims

| Place of search | Date of completion of the search | Examiner |
|---|---|---|
| Munich | 22 June 2021 | Hasubek, Bodo |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

# EP 4 036 826 A1

## ANNEX TO THE EUROPEAN SEARCH REPORT
## ON EUROPEAN PATENT APPLICATION NO.

EP 21 30 5127

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2021

| Patent document cited in search report | | Publication date | Patent family member(s) | | Publication date |
|---|---|---|---|---|---|
| US 2018060812 | A1 | 01-03-2018 | US 2018060812 A1 | | 01-03-2018 |
| | | | US 2020219057 A1 | | 09-07-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018190062 A